# EUROPEAN PATENT APPLICATION

(11) **EP 3 922 769 A1**
(43) Date of publication of application: **15.12.2021**
(21) Application number: 21168027.7
(22) Date of filing: 13.04.2021
(51) Int. Cl.: D21H 19/40, D21H 19/58, D21H 19/82, D21H 21/16, D21H 21/52, D21H 27/10

(54) **COATING COMPOSITION AND PAPER MATERIAL**

(30) Priority: 09.06.2020 US 202063036448 P
(71) Applicant: Sustainable Carbohydrate Innovation Co., Ltd., Taipei City 10087 (TW)
(72) Inventor: Huang, Ya-Hui, 10087 Taipei City (TW); Lee, Pei-Shan, 10087 Taipei City (TW)
(74) Representative: Becker & Kurig Partnerschaft Patentanwälte PartmbB

(57) **Abstract**

A coating composition and a paper material are provided. The coating composition has water resistance and oil resistance, and includes 100 parts by weight of acrylic resin and 25 to 200 parts by weight of clay. An aspect ratio of the clay is greater than 20.

## Description

### BACKGROUND

### Technical Field

The disclosure relates to a coating composition and a paper material, particularly to a coating composition that has water resistance and oil resistance and that can be used to coat a paper material.

### Description of Related Art

In recent years, plastic waste such as single-use plastics and non-recyclable plastic products has gradually become a global problem. Conventionally, a polyethylene lining on a paper cup or paper container may retain heat while removing liquid. However, since most paper recycling plants lack equipment to filter out polyethylene films, the polyethylene film material reduces the recyclability of used paper cups and used paper containers. Therefore, many countries have recently begun to reduce the use of petroleum-derived packaging materials in favor of bio-based packaging materials.

Based on the above, those skilled in the art have endeavored to develop a coating composition for a paper material that can replace the conventional polyethylene film lining and improve the recyclability of used paper cups and used paper containers.

### SUMMARY

The disclosure provides a coating composition. The coating composition has not only high water resistance and high oil resistance but also heat sealability.

The coating composition of the disclosure includes 100 parts by weight of acrylic resin and 25 to 200 parts by weight of clay. The clay has an aspect ratio of greater than 20.

In an embodiment of the disclosure, the acrylic resin includes styrene acrylic resin, methacrylic resin or styrene-butadiene resin.

In an embodiment of the disclosure, the clay has a layered structure.

The disclosure further provides a paper material. The above-mentioned coating composition is coated on at least one surface of the paper material to form a first coating layer.

In an embodiment of the disclosure, a coating weight of the first coating layer is 5 g/m² to 20 g/m².

In an embodiment of the disclosure, the above-mentioned coating composition or styrene acrylic resin is further coated on the first coating layer of the paper material to form a second coating layer.

In an embodiment of the disclosure, a coating weight of the second coating layer is 5 g/m² to 20 g/m², and a sum of the coating weight of the first coating layer and the coating weight of the second coating layer is not more than 25 g/m².

In an embodiment of the disclosure, the paper material has a basis weight of 30 g/m² to 600 g/m².

In an embodiment of the disclosure, the paper material has a paper density of 0.45 g/m² to 0.85 g/cm³.

Based on the above, the disclosure provides a coating composition and a paper material. The coating composition includes 100 parts by weight of acrylic resin and 25 to 200 parts by weight of clay. The clay has an aspect ratio of greater than 20. The coating composition has not only high water resistance and high oil resistance but also heat sealability. Moreover, in a repulping process on a paper container or sealing paper prepared from the paper material of the disclosure, the coating layer formed of the above-mentioned coating composition can be easily separated from the paper material, and a paper fiber recovery rate of 95% or higher can be achieved.

### DESCRIPTION OF THE EMBODIMENTS

Hereinafter, embodiments of the disclosure will be described in detail. However, these embodiments are illustrative, and the disclosure is not limited thereto.

In this specification, a range represented by "one numerical value to another numerical value" is a schematic representation in order to avoid listing all the numerical values in the range in the specification. Therefore, description of a specific numerical range covers any numerical value in the numerical range and a smaller numerical range defined by any numerical value in the numerical range, as is the case with any numerical value and a smaller numerical range thereof in the specification.

The disclosure provides a coating composition having water resistance and oil resistance. The coating composition includes 100 parts by weight of acrylic resin and 25 to 200 parts by weight of clay. The clay has an aspect ratio of greater than 20. Moreover, the clay has a layered structure such that good shielding properties are provided to prevent water from penetrating a paper layer and excellent operability for anti-adhesion is provided when the clay is mixed with resin. Since the coating composition of the disclosure includes clay, the material cost for using acrylic resin can be reduced, the water-blocking performance can be improved, and the size of a coated material after drying can be stably maintained. In the present embodiment, the acrylic resin may include styrene acrylic resin, methacrylic resin or styrene-butadiene resin. However, the disclosure is not limited thereto.

The disclosure further provides a paper material. The above-mentioned coating composition is coated on at least one surface of the paper material to form a first coating layer, in which a coating weight of the first coating layer is, for example, 5 g/m² to 20 g/m². Although the disclosure may be achieved by coating the above-mentioned coating composition on at least one surface of the paper material and forming the first coating layer, in another embodiment of the disclosure, the above-mentioned coating composition or styrene acrylic resin may further be coated on the first coating layer of the paper material to form a second coating layer. In the another embodiment, a coating weight of the second coating layer is, for example, 5 g/m² to 20 g/m², and a sum of the coating weight of the first coating layer and the coating weight of the second coating layer is, for example, not more than 25 g/m². It is to be noted that, when the second coating layer is formed of the above-mentioned coating composition, both the coating composition for forming the first coating layer and the coating composition for forming the second coating layer may include 100 parts by weight of acrylic resin and 25 to 200 parts by weight of clay. However, the clay content in the coating composition for forming the first coating layer may be the same as or different from the clay content in the coating composition for forming the second coating layer.

In the present embodiment, the paper material has a basis weight of, for example, 30 g/m² to 600 g/m², and has a paper density of, for example, 0.45 g/m² to 0.85 g/cm³. When the paper density of the paper material is within the above range, the paper material has flexibility and is favorable for processing of packaging paper.

The paper material described in the disclosure includes paper or cardboard, and may also be wood, a polymer (for example, polyethylene) substrate, or any other substrate that can be coated with the coating composition of the disclosure. The disclosure is not limited thereto. The paper material provided by the disclosure has water resistance and oil resistance, and is suitable as a paper-based food packaging material such as a paper bag, a paper container, a paper box or a paper cup. In addition, the paper material provided by the disclosure also has heat sealability and may be used in place of a plastic sealing film in preparation of sealing paper for a beverage cup.

Hereinafter, the coating composition and the paper material proposed in the above embodiments will be described in detail through experimental examples. However, the following experimental examples are not intended to limit the disclosure.

### Preparation of Paper Material

Raw pulp was obtained from hardwood kraft pulp (LBKP) and softwood kraft pulp (NBKP) having a Canadian standard freeness (CSF) of 350 ml. The raw pulp was subjected to a papermaking process using a paper machine to obtain a paper material having a basis weight of 310 g/m². The paper material was further calendered to improve surface smoothness, and a paper density of 0.65±0.1 g/cm³ was achieved.

### Preparation of Coating Composition

Clay (having an aspect ratio of 25) and sodium polyacrylate (0.3 part by dry weight relative to the clay) added as dispersants were dispersed by a mixer to prepare a kaolin slurry having a solid content of 68%. The obtained kaolin slurry was mixed with styrene acrylic resin (Michem^{®} Coat 95 made by Michelman, simply referred to as "MC95") in a dry weight ratio of MC95:clay of 100:25, 100:33, 100:50, 100:75, 100:100, and 100:200, respectively, to prepare a coating composition for the following paper material coating.

### Paper Material Coating

The coating composition was coated on the paper material prepared as above at a running speed of 100 m/min, and dried to form a first coating layer. Then, the coating composition or styrene acrylic resin was further coated on the first coating layer of the paper material at a running speed of 100 m/min to form a second coating layer. Table 1 below shows the coating weights and the MC95/clay ratios (in the coating composition) of the first coating layer and the second coating layer in Example 1 to 17 and Comparative Examples 1 to 3. In addition, the water resistance and oil resistance of Examples 1 to 17 and Comparative Examples 1 to 3 were evaluated using a TAPPI T 441 test method and a TAPPI T 559 test method, respectively, and the evaluation results are shown in Table 1 below.

The TAPPI T 441 test method measures water absorption of a coating layer by a Cobb water absorption tester. The water absorption (Cobb value) is defined as the amount of water absorbed by 1 square meter of paper, cardboard or corrugated fiberboard under 1 cm of water in a specific time (30 minutes for the Cobb value shown in Table 1). A standard test time is 120 second. Basically, the lower the Cobb value, the better the water resistance.

The TAPPI T 559 test method is also called kit test, and is used to measure the oil resistance of a coating layer. In the TAPPI T 559 test method, a mixture of castor oil, heptane, and toluene was dropped on a coated paper material, followed by observation of whether the coated paper material turns black after 15 seconds. A total of twelve different mixtures were used, and were numbered from Mixture 1 to Mixture 12 based on permeability. Among them, Mixture 12 had the most permeability and Mixture 1 had the least permeability. The less the castor oil content in the mixture, the more corrosive the mixture. When at least part of the test mixture is absorbed by the coated paper material, the blackening or coloring of the coated paper material indicates a "failure". A sample score indicates the mixture (Mixture 1 to Mixture 12) with the largest number that was used when the coated paper material did not "fail" and is called "Kit no." in Table 1. Basically, the higher the Kit no., the higher the oil resistance.

**Table 1**

| | First coating layer | | Second coating layer | | Cobb value (g/m²) | Kit no. |
|---|---|---|---|---|---|---|
| | Dry weight ratio of MC95 to Clay | Coating weight (g/m²) | Dry weight ratio of MC95 to Clay | Coating weight (g/m²) | | |
| Example 1 | 100:50 | 5 | 100:25 | 3 | 8 | 5 |
| Example 2 | 100:50 | 5 | 100:33 | 3 | 5.8 | 5 |
| Example 3 | 100:50 | 5 | 100:50 | 3 | 7.9 | 5 |
| Example 4 | 100:50 | 5 | 100:50 | 5 | 4.3 | 5 |
| Example 5 | 100:75 | 5 | 100:50 | 3 | 4.7 | 5 |
| Example 6 | 100:50 | 5 | Containing only MC95 and no clay | 2 | 10.7 | 6 |
| Example 7 | 100:75 | 5 | Containing only MC95 and no clay | 2 | 4.6 | 5 |
| Example 8 | 100:100 | 5 | Containing only MC95 and no clay | 2 | 4.6 | 5 |
| Example 9 | 100:200 | 5 | Containing only MC95 and no clay | 2 | 9.1 | 5 |
| Example 10 | 100:100 | 6 | 100:33 | 4 | 8.5 | 5 |
| Example 11 | 100:100 | 6 | 100:25 | 4 | 7.3 | 5 |
| Example 12 | 100:25 | 3 | | | 12.5 | 3 |
| Example 13 | 100:50 | 5 | | | 15.5 | 5 |
| Example 14 | 100:75 | 5 | | | 17.6 | 5 |
| Example 15 | 100:100 | 5 | | | 11.7 | 5 |
| Example 16 | 100:100 | 10 | | | 5.5 | 6 |
| Example 17 | 100:100 | 15 | | | 4.5 | 7 |
| Comparative Example 1 | Containing only MC95 and no clay | 3 | Containing only MC95 and no clay | 3 | 6.6 | 5 |
| Comparative Example 2 | Containing only MC95 and no clay | 3 | | | 11.4 | 5 |
| Comparative Example 3 | Containing only MC95 and no clay | 6 | | | 8.6 | 6 |

As is clear from Table 1, Examples 1 to 17 that included the first coating layer formed of the coating composition of the disclosure all exhibited good water resistance and oil resistance. In addition, Examples 1 to 11 that included the second coating layer formed of the coating composition of the disclosure or styrene acrylic resin were further improved in water resistance. In addition, Comparative Examples 1 to 3 only used styrene acrylic resin as the coating composition, while better water resistance than Comparative Examples 1 to 3 was achieved by the second coating layer (Examples 1 to 11) formed of the coating composition of the disclosure or styrene acrylic resin.

In summary, the disclosure provides a coating composition and a paper material. The coating composition includes 100 parts by weight of acrylic resin and 25 to 200 parts by weight of clay. The clay has an aspect ratio of greater than 20. The above-mentioned coating composition is coated on at least one surface of the paper material of the disclosure. In this way, the paper material has not only high water resistance and high oil resistance but also heat sealability. Moreover, the paper material can be completely recycled in a repulping process. Therefore, the disclosure effectively eliminates the problem of low recyclability of the conventional polyethylene film material.

## Claims

1. A coating composition, having water resistance and oil resistance and comprising:
100 parts by weight of acrylic resin; and
25 to 200 parts by weight of clay, the clay having an aspect ratio of greater than 20.

2. The coating composition according to claim 1, wherein the acrylic resin comprises styrene acrylic resin, methacrylic resin, or styrene-butadiene resin.

3. The coating composition according to claim 1, wherein the clay has a layered structure.

4. A paper material, wherein the coating composition according to any one of claims 1 to 3 is coated on at least one surface of the paper material to form a first coating layer.

5. The paper material according to claim 4, wherein a coating weight of the first coating layer is 5 g/m² to 20 g/m².

6. The paper material according to claim 4, wherein the coating composition according to any one of claims 1 to 3 or styrene acrylic resin is further coated on the first coating layer of the paper material to form a second coating layer.

7. The paper material according to claim 6, wherein a coating weight of the second coating layer is 5 g/m² to 20 g/m², and a sum of the coating weight of the first coating layer and the coating weight of the second coating layer is not more than 25 g/m².

8. The paper material according to claim 4, having a basis weight of 30 g/m² to 600 g/m².

9. The paper material according to claim 4, having a paper density of 0.45 g/m² to 0.85 g/cm³.
